# EUROPEAN PATENT SPECIFICATION

(11) **EP 1 557 839 B1**
(45) Date of publication and mention of the grant of the patent: **29.10.2008**
(21) Application number: 05250208.5
(22) Date of filing: 17.01.2005
(51) Int. Cl.: G11B 27/32

(54) **Method and apparatus for recording and reproducing video data**
Verfahren und Vorrichtung zur Aufnahme und Wiedergabe von Videodaten
Procédé et appareil pour l'enregistrement et la reproduction de données vidéo

(30) Priority: 19.01.2004 KR 2004003806
(43) Date of publication of application: 27.07.2005
(73) Proprietor: SAMSUNG ELECTRONICS CO., LTD., Suwon-si, Gyeonggi-do (KR)
(72) Inventor: Choi, Yun-ho, Seoul (KR); Lee, Kang-suk, Seongnam-si Gyeonggi-do (KR)
(74) Representative: Clark, David James

(56) References cited:
- EP-A- 1 249 835
- US-A1- 2003 126 596
- US-A1- 2003 231 859

## Description

The present invention relates to video data recording and reproducing, and more particularly, to a video data recording method and apparatus having a portion hiding function and a video data reproducing method and apparatus thereby.

Since the advent of digital broadcasting services, digital video recorders, which can record digital broadcasting programs, have been developed. A digital video recorder can store received broadcasting programs on a hard disc accommodated in the digital video recorder while displaying the received broadcasting programs to a user via a display device by decoding the received broadcasting programs.

When a video program, such as a broadcasting program stored in a conventional digital video recorder, is reproduced, in order to not display specific portions of the video program, a user must directly edit the stored video program. That is, the user must make a copy of the video program, remove specific portions that the user does not desire to be displayed, and store the modified video program again.

US 2003/0126596 describes a viewing restriction method of selecting desired contents and recording/reproducing the contents onto/from an optical recording medium.

EP 1 249 835 describes a method in which contents are divided into a plurality of parts of the contents with a predetermined time interval, thereby to form a plurality of pieces of divided-contents information.

US 2003/0231859 describes an apparatus and method for managing data stored in a personal video recorder, in which multiple users are allowed to set protection levels for programs stored on the personal video recorder.

According to the present invention there is provided an apparatus and method as set forth in the appended claims. Preferred features of the invention will be apparent from the dependent claims, and the description which follows.

An aspect of the present invention provides a video data recording method and apparatus providing a portion hiding function by which specific portions of a video program are not displayed when the video program is reproduced.

Additional aspects and/or advantages of the invention will be set forth in part in the description which follows and, in part, will be obvious from the description, or may be learned by practice of the invention.

The above and other features and/or advantages of the present invention will become more apparent and more readily appreciated by describing in detail exemplary embodiments thereof with reference to the accompanying drawings in which:
Figure 1 is a block diagram of a video data recording apparatus according to an embodiment of the present invention;
Figure 2 is a flowchart illustrating a video data recording method according to an embodiment of the present invention;
Figure 3 is a block diagram of an embodiment of the hidden area position information generator shown in Figure 1;
Figure 4 illustrates an example of a video sequence including hidden areas;
Figure 5 illustrates GOPs corresponding to starts and ends of hidden areas;
Figure 6 is an example of a hidden information position table;
Figure 7 is an example of messages displayed to a user when a video program is recorded according to an embodiment of the present invention;
Figure 8 is a block diagram of a video data reproducing apparatus for use in connection with an embodiment of the present invention;
Figure 9 is a flowchart illustrating a video data reproducing method for use in connection with an embodiment of the present invention; and
Figure 10 is an example of messages displayed to a user when a video program recorded in a hidden recording mode is reproduced.

Reference will now be made in detail to the embodiments of the present invention, examples of which are illustrated in the accompanying drawings, wherein like reference numerals refer to the like elements throughout. The embodiments are described below to explain the present invention by referring to the figures.

A hidden recording mode is defined as a recording mode in which, when a user selects specific portions of a video program to be recorded, only residual video is reproduced without reproducing the selected specific portions when the video program is reproduced. A hidden area is defined as a selected portion not to be reproduced when the video program is reproduced.

Reproduction modes in which a video program recorded in the hidden recording mode may be reproduced include a hidden reproduction mode and a hidden release mode. In the hidden reproduction mode, only residual video not hidden areas are reproduced when a video program recorded in the hidden recording mode is reproduced. In the hidden release mode, a video program including hidden areas (i.e., unedited) is reproduced.

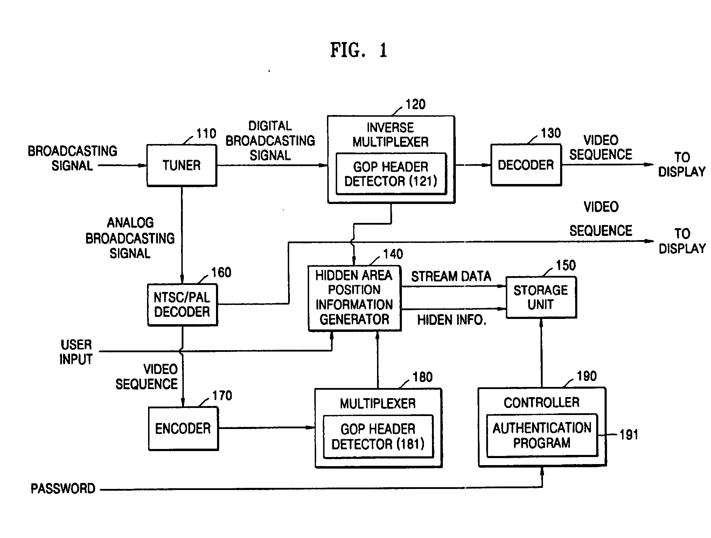

Figure 1 is a block diagram of a video data recording apparatus according to an embodiment of the present invention. The video data recording apparatus receives a broadcasting signal carrying a broadcasting program, reproduces the broadcasting program to a user via a display device, and stores the broadcasting signal in a storage unit. The broadcasting signal is a digital broadcasting signal or an analog broadcasting signal. The broadcasting signal of the present embodiment is a bitstream encoded according to an MPEG standard. Examples of the digital data may include, but are not be limited to, MPEG1, MPEG2, MPEG4, MPEG7, QUICKTIME, AV1 and MS ASF (Advanced Streaming Format) files.

Referring to Figure 1, the video data recording apparatus includes a tuner 110, an inverse multiplexer 120, a decoder 130, a hidden area position information generator 140, a storage unit 150, an NTSC/PAL decoder 160, an encoder 170, a multiplexer 180, and a controller 190.

If an input broadcasting signal is a digital broadcasting signal, the tuner 110 transmits the broadcasting signal to the inverse multiplexer 120. If the input broadcasting signal is an analog broadcasting signal, the tuner 110 transmits the broadcasting signal to the NTSC/PAL decoder 160.

The digital broadcasting signal is signal processed by the inverse multiplexer 120 and the decoder 130 and reproduced to a user via a display device (not shown). The decoder 130 decodes data encoded by an MPEG method according to the shown embodiment, it is understood that other methods can be used.

If a broadcasting signal, which the tuner 110 has received, is an analog broadcasting signal encoded according to a conventional NTSC or PAL method, the analog broadcasting signal is decoded by the NTSC/PAL decoder 160 and reproduced to the user via the display device (Not Shown) .

If the hidden recording mode is selected by a user, the received broadcasting signal is stored in the storage unit 150 as stream data. The storage unit 150 can be realized in various ways. For example, the storage unit 150 may be a hard disc, a high capacity memory, a recordable optical recording medium, and/or magnetic or magneto optical discs or tapes.

If a user viewing a reproduced video program via the display device inputs start and end positions of a hidden area using an input device (not shown) such as a remote control, the hidden area position information generator 140 generates hidden information including hidden area position information corresponding to the start and end positions of the hidden area inputted by the user and stores the hidden information in the storage unit 150.

According to a preferred aspect of the present invention, even if an input signal is an analog signal and is not a digital broadcasting signal, the analog signal can still be recorded in the hidden mode by being input to the encoder 170, encoded by the encoder 170 according to an MPEG method, multiplexed and generated as a bitstream by the multiplexer 180, and input to the hidden area position information generator 140. However, it is understood that if no analog signal is to be received, the decoder 160 and the encoder 170 need not be used. Alternatively, where the analog or digital signal is received from an input device (such as a camcorder), the decoder 160 and encoder 170 can be used for such non-broadcast signals.

In the present embodiment, a user inputs a command to the storage unit 150 using a remote controller (not shown). However, the input device is not limit to the remote control, and can be realized in various ways according to conventional technologies.

Based on the structure of the video data recording apparatus according to an embodiment of the present invention as shown in Figure 1, a video data recording method according to an embodiment of the present invention will now be described in detail.

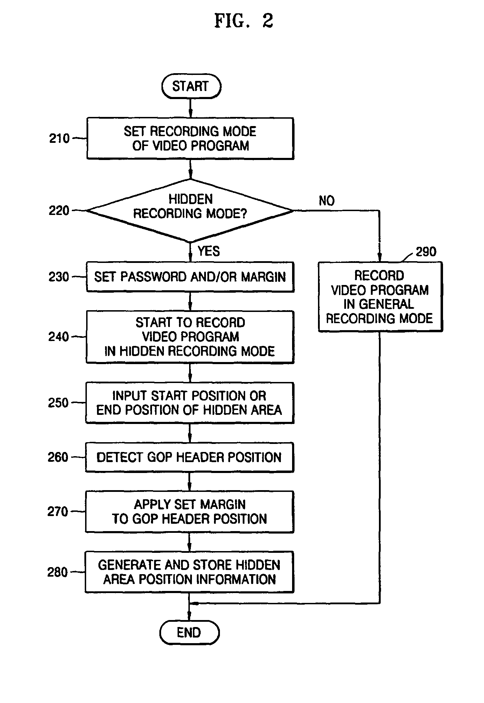

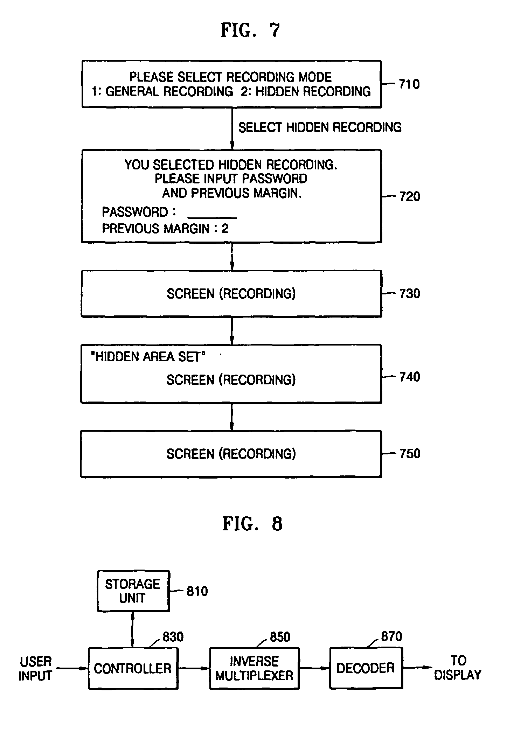

Figure 2 is a flowchart illustrating a video data recording method according to an embodiment of the present invention. A user selects a recording mode using a remote controller when a first message 710 of Figure 7 is displayed on a display device in operation 210.

If the user selects a general recording mode in operation 220, general recording of a video program selected by the user proceeds in operation 290. However, if the user selects a hidden recording mode in operation 220, a second message 720 of Figure 7 requesting a password and/or a margin required for the hidden recording is displayed by the display device, and the user inputs the password and/or the margin required for the hidden recording in operation 230. A secret number selected by the user can be used as the password. The password input by the user is processed by an authenticating program 191 stored in the controller 190. The password is stored in the storage unit 150 according to control of the controller 190. The password is used when it is to authenticate whether the user is an authorized user when a video program recorded in the hidden recording mode is reproduced in the hidden release mode. However, it is understood that the password need not be used in all aspects of the invention, and that other authentication techniques (such as biometrics or facial recognition) can be used.

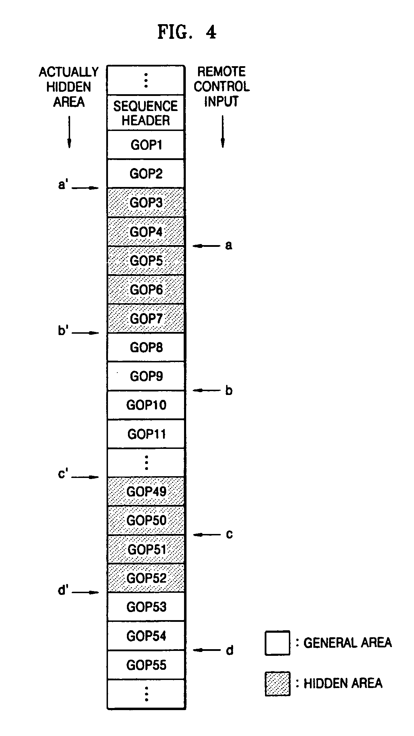

The margin input by the user in operation 230 will now be described with reference to Figure 4. Figure 4 illustrates an example of a video sequence including hidden areas. The video sequence includes a sequence header and a plurality of group of pictures (GOPs). A GOP is a unit of video encoding or decoding and includes a plurality of pictures. According to an MPEG-2 standard, each GOP includes pluralities of intra (I) pictures, bidirectionally predictive (B) pictures, and predictive (P) pictures. The B pictures and P pictures are encoded by referring to other pictures in the same GOP. Therefore, the decoder 130 cannot decode an encoded video without referring to other pictures.

When the user is viewing a video program, which is being reproduced via the display device, the user pushes a hidden area set button on the remote controller at a position that the user desires to designate as a start position of a hidden area, and pushes the hidden area set button again at another position that the user desires to designate as an end position of the hidden area. It is understandable that the user can alternately push a hidden area set button until the end position of the hidden area and release the button to finish.

Referring to Figure 4, positions in the video sequence corresponding to when the user pushed the hidden area set button are a, b, c, and d. When the margin input by the user is 2, actual positions designated as start and end positions of hidden areas are a', b', c', and d'. Therefore, an a'-b' portion is designated as a first hidden area, and a c'-d' portion is designated as a second hidden area. The reason for setting the margin is as follows. When a scene that the user desires to hide is displayed and the user inputs a hidden area set command to the hidden area position information generator 140 by pushing the hidden area set button, a plurality of pictures have already elapsed. Accordingly, a hidden area as indicated by the pictures selected by the user is always temporally delayed from a portion desirably selected by the user. Thus, to solve this problem, the video data recording apparatus according to an aspect of the present invention allows a predetermined margin to be set.

After setting the video data recording apparatus to the hidden recording mode, recording starts in the hidden recording mode in operation 240, and, during the recording, the user issues a hidden area start command or a hidden area end command by pushing the hidden area set button in operation 250. When the user issues the hidden area start command by pushing the hidden area set button, a fourth message 740 indicating that the hidden area has been set is displayed by the display device. When the user pushes the hidden area set button again, the message disappears, as indicated by a fifth message 750 of Figure 7.

The hidden area set button on the remote controller can be realized according to a toggle method such that the hidden area start command is transmitted when the user pushes the hidden area set button once and the hidden area end command is transmitted when the user pushes the hidden area set button again. However, a remote controller can separately have a hidden area set button and a hidden area release button.

When a hidden area start position or a hidden area end position is input to the hidden area position information generator 140 by the user in operation 250, the hidden area position information generator 140 performs operations 260 through 280.

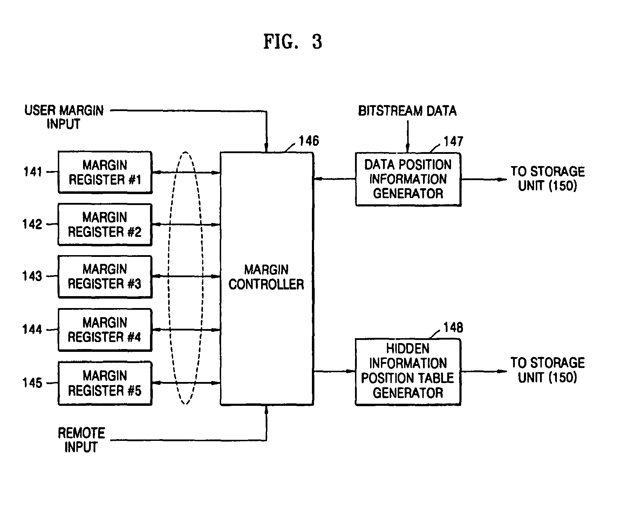

Figure 3 is a block diagram of the hidden area position information generator 140 shown in Figure 1. Referring to Figure 3, the hidden area position information generator 140 includes a plurality of margin registers 141 through 145, a margin controller 146, a data position information generator 147, and a hidden information position table generator 148.

When the data position information generator 147 inputs an enable signal followed by a transport stream (TS) including a GOP header from a GOP header director 121 included in the inverse multiplexer 120 and inputs TS data from the inverse multiplexer 120, the data position information generator 147 maps the TS data to an address of the storage unit 150 in which the TS data is stored and transmits the mapped TS data to the storage unit 150. At the same time, the data position information generator 147 also transmits the address of the storage unit 150, in which the TS data is stored, to the margin controller 146.

The margin controller 146 receives the address of the storage unit 150 from the data position information generator 147 and stores the address in one of the plurality of margin registers 141 through 145. Data is sequentially stored in a first margin register 141 through a fifth margin register 145. It is understandable that the margin registers can be made of memory.

When the hidden area start position or the hidden area end position is input to the hidden area position information generator 140 by the user in operation 250, the margin controller 146 detects a position of a GOP header stored in the storage unit 150 from data stored in a margin register in which the most recently stored data is stored in operation 260. Referring to the video sequence shown in Figure 4, when an address of a GOP header of a GOP5 stored in the storage unit 150 is stored in a fourth margin register 144 and a hidden area start command is input to the hidden area position information generator 140 by the user, the margin controller 146 detects the address of the GOP header of the GOP5 from the fourth margin register 144 in operation 260.

If a margin value input by the user is "2", the margin controller 146 applies the margin value input by the user to the detected position in operation 270. Accordingly, the margin controller 146 reads an address of the storage unit 150 stored in a second margin register 142 not the fourth margin register 144 and transmits the address to the hidden information position table generator 148.

The hidden information position table generator 148 generates a hidden information position table including hidden area position information in response to position information of the GOP header, which is stored in the storage unit 150, transmitted from the margin controller 146 and stores the hidden information position table in the storage unit 150 by being correlated the hidden information position table with video program data, which is being recorded, in operation 280.

For example, in the video sequence of Figure 4, the a'-b' portion is designated as the first hidden area, and the c'-d' portion is designated as the second hidden area. That is, a start of the first hidden area is a GOP3, and an end of the first hidden area is a GOP7. A start of the second hidden area is a GOP49, and an end of the second hidden area is a GOP52.

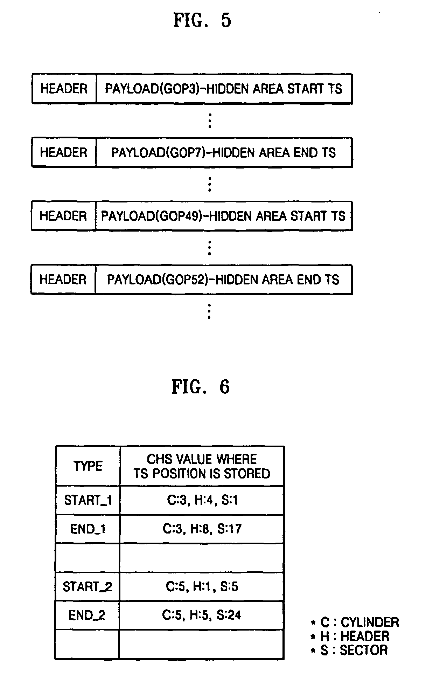

Figure 5 illustrates GOPs corresponding to starts and ends of hidden areas.

Figure 6 is an example of a hidden information position table generated by the hidden information position table generator 148 when two hidden areas are designated as shown in Figures 4 and 5.

Figure 8 is a block diagram of a video data reproducing apparatus for use in connetion with an embodiment of the present invention. Referring to Figure 8, the video data reproducing apparatus includes a storage unit 810, a controller 830, an inverse multiplexer 850, and a decoder 870.

Video programs recorded in the hidden recording mode and previously input passwords for access when reproducing the video programs in the hidden release mode are stored in the storage unit 810.

The controller 830 controls the entire operation of the video data reproducing apparatus in response to commands input by a user.

The inverse multiplexer 850 inverse multiplexes a bitstream of a video program read by the controller 830 from the storage unit 810 and transmits the multiplexed data to the decoder 870. The decoder 870 decodes the multiplexed data and transmits the decoded video program to a display device (not shown) to display the video program to the user. While not required, it is understood that the decoder 870 decodes the program using a method such as an MPEG method.

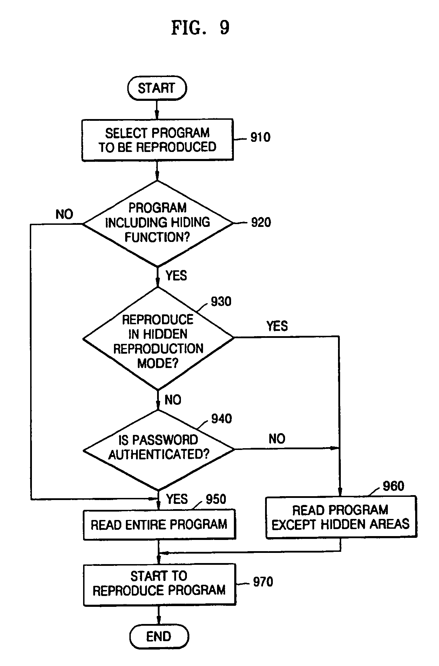

Based on the structure of the video data reproducing apparatus shown in Figure 8, a video data reproducing method will now be described in detail using Figure 9. Figure 9 is a flowchart illustrating a video data reproducing method.

A user selects a video program to be reproduced among video programs stored in the storage unit 810 in operation 910.

The controller 830 determines whether the selected video program is a program recorded in the hidden recording mode in operation 920. If the selected video program is not a program recorded in the hidden recording mode, the controller 830 reads all of the data of the selected video program from the storage unit 810 in operation 950 and starts to reproduce all of the data of the selected video program in operation 970.

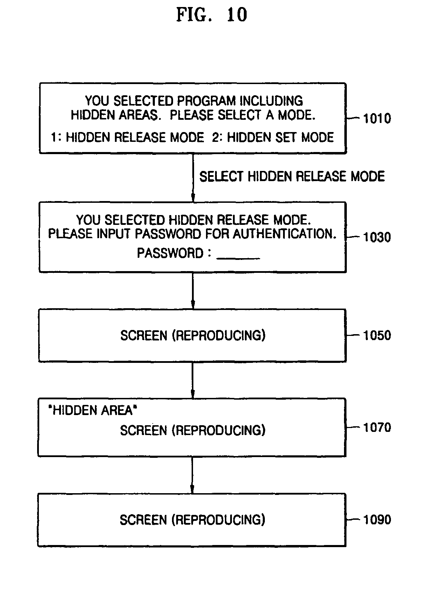

However, if the selected video program is a program recorded in the hidden recording mode, the controller 830 displays a first message 1010 of Figure 10 requesting selection of a reproduction mode to the user via the display device.

The user selects one of a hidden reproduction mode and a hidden release mode in operation 930. If the user selects the hidden reproduction mode in operation 930, the controller 830 reads residual data except data corresponding to hidden areas with reference to a hidden information position table read from the storage unit 810 in operation 960 and starts to reproduce the residual data of the selected video program in operation 970.

On the other hand, if the user selects the hidden release mode in operation 930, the controller 830 displays a second message 1030 of Figure 10 requesting input of a predetermined password (e.g., a secret number) previously input to reproduce data in the hidden release mode.

The controller 830 authenticates the password input by the user in operation 940. The password authentication is performed by comparing the input password with a password stored in the storage unit 810 and determining whether the two passwords are the same.

If the authentication of the password input by the user fails in operation 940, or if the user does not input a password, reproduction in the hidden reproduction mode starts according to operations 960 and 970. When the video program is being reproduced, if a designated hidden area is to be reproduced, a third message 1070 indicating that the image is a part of a hidden area is displayed instead of reproduced data. When the hidden area ends, the video program is normally reproduced.

However, the authentication of the password input by the user succeeds in operation 940, the controller 830 reads all of the data of the selected video program from the storage unit 810 in operation 950 and reproduces all of the data of the selected video program in operation 970.

While not required, it is understood that the present invention can also be embodied as computer readable codes on at least one computer readable recording medium useable with at least a general or special purpose computer. The computer readable recording medium is any data storage device that can store data which can be thereafter read by a computer system. Examples of the computer readable recording medium include read-only memory (ROM), random-access memory (RAM), CD-ROMs, magnetic tapes, floppy disks, optical data storage devices, and carrier waves (such as data transmission through the Internet). The computer readable recording medium can also be distributed over network coupled computer systems so that the computer readable code is stored and executed in a distributed fashion.

As described above, according to an embodiment of the present invention, a user can easily and accurately generate a video program with hidden areas without directly editing the video program to prevent specific portions of a recorded video program from being viewed by an unauthorized user. A function allowing the specific portions to be hidden is initiated by a simple operation of a remote controller when the video program is recorded. The present invention can be applied to various fields. For example, when a video program with scenes not to be viewed by children is recorded, parents can designate specific scenes as hidden areas, and adults can view the entire video program by inputting a predetermined password. Also, specific portions of a video, which a person has taken, can be differently viewed according to time and places.

## Claims

1. A video data recording method of recording a bitstream including video data, the method comprising:
displaying the video data by decoding the bitstream and storing the bitstream in a predetermined storage unit (150);
generating a position information of an area of the bitstream to be hidden in response to a portion hiding command input by a user, wherein said hidden bitstream area is not reproduced when the stored bitstream is reproduced; and
storing the position information of the hidden area in the storage unit (150); **characterised in that** the position information of the hidden area is generated to correspond to a portion of the bitstream starting before the portion hiding command is input by the user by an amount of time corresponding to a predetermined margin.

2. The method of claim 1, wherein the determining of the position of the hidden area comprises:
generating a start position information of the hidden area in response to a hidden area start command input by the user; and
generating an end position information of the hidden area in response to a hidden area end command input by the user.

3. The method of claim 2, wherein the start position information of the hidden area or the end position information of the hidden area is a position of a header of a video reproduction unit including at least a picture.

4. The method of claim 3, wherein the position information of the hidden area indicates a position where a header corresponding to the start position of the hidden area or the end position of the hidden area is stored in the storage unit (150).

5. The method of any of claims 1 to 4, further comprising:
storing a password input by the user required when a video program including the hidden areas is reproduced.

6. The method of any preceding claim, further comprising:
setting the margin in response to a user input.

7. The method of any preceding claim, wherein the step of generating a start position information of the hidden area comprises pushing a hidden area set button.

8. The method of claim 7, wherein the step of generating an end position information of the hidden area comprises pushing the hidden area set button again after pushing the hidden area set button.

9. The method of any preceding claim, wherein the step of generating the position information further comprises generating the position information for the hidden area while the hidden area is being displayed.

10. The method of claim 9, wherein the step of storing the position information further comprises correlating the generated position information with the bitstream and storing the correlated position information.

11. A video data recording and/or reproducing apparatus comprising:
a decoder (130) receiving a bitstream including video data and decoding the bitstream;
a storage unit (150) storing the decoded bitstream; and
a hidden bitstream area position information generator (140) determining a position of a hidden bitstream area in response to a portion hiding command input by a user using an input device, wherein said hidden bitstream area is not reproduced when the stored bitstream is reproduced, and storing the position information of the hidden area in the storage unit (150); **characterised in that** the position information of the hidden area is determined according to a predetermined margin such that position information corresponds to a portion of the bitstream starting before the portion hiding command is input by the user by an amount of time corresponding to the margin.

12. The apparatus of claim 11, wherein the hidden area position information generator (140) determines a start position of the hidden area in response to a hidden area start command input by the user and determines an end position of the hidden area in response to a hidden area end command input by the user.

13. The apparatus of claim 12, wherein the start position of the hidden area or the end position of the hidden area is a position of a header of a video reproduction unit including a plurality of pictures.

14. The apparatus of claim 13, wherein the position information of the hidden area indicates a position where a header corresponding to the start position of the hidden area or the end position of the hidden area is stored in the storage unit (150).

15. The apparatus of any of claims 11 to 14, wherein the portion hiding command is input while the hidden area is being viewed.

16. The apparatus of claim 15, wherein the stored position information is the position information that is correlated with the bitstream.

17. A computer readable medium having recorded thereon a computer program for performing a method implemented by a computer, the method comprising:
displaying a video by decoding the bitstream and storing the bitstream in a predetermined storage unit (150) ;
determining a position of a hidden area in said bitstream in response to a portion hiding command input by a user, wherein said hidden bitstream area is not reproduced when said stored bitstream is reproduced; and
storing position information of the hidden area in the storage unit (150) correlated the position information with the bitstream; **characterised in that** the position information of the hidden area is determined according to a predetermined margin such that position information corresponds to a portion of the bitstream starting before the portion hiding command is input by the user by an amount of time corresponding to the margin.

18. The computer readable medium of claim 17 wherein the step of generating the position further comprises generating the position information for the hidden area while the hidden area is being displayed.

## Patentansprüche

1. Videodatenaufzeichnungsverfahren zum Aufzeichnen eines Bitstroms, der Videodaten enthält, mit den folgenden Schritten:
Anzeigen der Videodaten durch Decodieren des Bitstroms und Speichern des Bitstroms in einer vorbestimmten Speichereinheit (150);
Erzeugen einer Positionsinformation eines zu verbergenden Bereichs des Bitstroms als Reaktion auf eine Teilverbergungbefehlseingabe durch einen Benutzer, wobei der verborgene Bitstrombereich nicht wiedergegeben wird, wenn der gespeicherte Bitstrom wiedergegeben wird; und
Speichern der Positionsinformation des verborgenen Bereichs in der Speichereinheit (150); **dadurch gekennzeichnet, daß** die Positionsinformation des verborgenen Bereichs so erzeugt wird, daß sie einem Teil des Bitstroms entspricht, der um eine Zeitspanne, die einer vorbestimmten Reserve entspricht, beginnt, bevor der Teilverbergungsbefehl durch den Benutzer eingegeben wird.

2. Verfahren nach Anspruch 1, wobei das Bestimmen der Position des verborgenen Bereichs folgendes umfaßt:
Erzeugen einer Startpositionsinformation des verborgenen Bereichs als Reaktion auf eine Verborgener-Bereich-Start-Befehlseingabe durch den Benutzer; und
Erzeugen einer Endpositionsinformation des verborgenen Bereichs als Reaktion auf eine Verborgener-Bereich-Ende-Befehlseingabe durch den Benutzer.

3. Verfahren nach Anspruch 2, wobei die Startpositionsinformation des verborgenen Bereichs oder die Endpositionsinformation des verborgenen Bereichs eine Position eines Kopfteils einer Videowiedergabeeinheit, die mindestens ein Bild enthält, ist.

4. Verfahren nach Anspruch 3, wobei die Positionsinformation des verborgenen Bereichs eine Position angibt, an der ein der Startposition des verborgenen Bereichs oder der Endposition des verborgenen Bereichs entsprechender Kopfteil in der Speichereinheit (150) gespeichert wird.

5. Verfahren nach einem der Ansprüche 1 bis 4, ferner umfassend:
Speichern einer Paßworteingabe durch den Benutzer, die erforderlich ist, wenn ein Videoprogramm, das die verborgenen Bereiche enthält, wiedergegeben wird.

6. Verfahren nach einem der vorhergehenden Ansprüche, ferner umfassend:
Einstellen der Reserve als Reaktion auf eine Benutzereingabe.

7. Verfahren nach einem der vorhergehenden Ansprüche, wobei der Schritt des Erzeugens einer Startpositionsinformation des verborgenen Bereichs die Betätigung einer Verborgener-Bereich-Einstelltaste umfaßt.

8. Verfahren nach Anspruch 7, wobei der Schritt des Erzeugens einer Endpositionsinformation des verborgenen Bereichs die nochmalige Betätigung der Verborgener-Bereich-Einstelltaste nach der Betätigung der Verborgener-Bereich-Einstelltaste umfaßt.

9. Verfahren nach einem der vorhergehenden Ansprüche, wobei der Schritt des Erzeugens der Positionsinformation ferner das Erzeugen der Positionsinformation für den verborgenen Bereich, während der verborgene Bereich angezeigt wird, umfaßt.

10. Verfahren nach Anspruch 9, wobei der Schritt des Speicherns der Positionsinformation ferner das Korrelieren der erzeugten Positionsinformation mit dem Bitstrom und das Speichern der korrelierten Positionsinformation umfaßt.

11. Vorrichtung zur Aufzeichnung und/oder Wiedergabe von Videodaten, umfassend:
einen Decoder (130), der einen Bitstrom empfängt, der Videodaten enthält, und den Bitstrom decodiert;
eine Speichereinheit (150), die den decodierten Bitstrom speichert; und
einen Generator (140) einer Positionsinformation eines verborgenen Bereichs des Bitstroms, der als Reaktion auf eine Teilverbergungbefehlseingabe durch einen Benutzer eine Position eines verborgenen Bitstrombereichs bestimmt unter Verwendung einer Eingabevorrichtung, wobei der verborgene Bitstrombereich nicht wiedergegeben wird, wenn der gespeicherte Bitstrom wiedergegeben wird, und die Positionsinformation des verborgenen Bereichs in der Speichereinheit (150) speichert; **dadurch gekennzeichnet, daß** die Positionsinformation des verborgenen Bereichs gemäß einer vorbestimmten Reserve dergestalt bestimmt wird, daß die Positionsinformation einem Teil des Bitstroms entspricht, der um eine Zeitspanne, die der Reserve entspricht, beginnt, bevor der Teilverbergungsbefehl durch den Benutzer eingegeben wird.

12. Vorrichtung nach Anspruch 11, wobei der Generator (140) einer Positionsinformation eines verborgenen Bereichs als Reaktion auf eine Verborgener-Bereich-Start-Befehlseingabe durch den Benutzer eine Startpositionsinformation des verborgenen Bereichs bestimmt und als Reaktion auf eine Verborgener-Bereich-Ende-Befehlseingabe durch den Benutzer eine Endpositionsinformation des verborgenen Bereichs bestimmt.

13. Vorrichtung nach Anspruch 12, wobei die Startpositionsinformation des verborgenen Bereichs oder die Endpositionsinformation des verborgenen Bereichs eine Position eines Kopfteils einer Videowiedergabeeinheit, die eine Vielzahl von Bildern enthält, ist.

14. Vorrichtung nach Anspruch 13, wobei die Positionsinformation des verborgenen Bereichs eine Position angibt, an der ein der Startposition des verborgenen Bereichs oder der Endposition des verborgenen Bereichs entsprechender Kopfteil in der Speichereinheit (150) gespeichert wird.

15. Vorrichtung nach einem der Ansprüche 11 bis 14, wobei der Teilverbergungsbefehl eingegeben wird, während der verborgene Bereich betrachtet wird.

16. Vorrichtung nach Anspruch 15, wobei die gespeicherte Positionsinformation die Positionsinformation ist, die mit dem Bitstrom korreliert ist.

17. Computerlesbares Medium, auf dem ein Computerprogramm zum Ausführen eines durch einen Computer implementierten Verfahrens aufgezeichnet ist, wobei das Verfahren die folgenden Schritte umfaßt:
Anzeigen eines Videos durch Decodieren des Bitstroms und Speichern des Bitstroms in einer vorbestimmten Speichereinheit (150);
Bestimmen einer Position eines verborgenen Bereichs in dem Bitstroms als Reaktion auf eine Teilverbergungbefehlseingabe durch einen Benutzer, wobei der verborgene Bitstrombereich nicht wiedergegeben wird, wenn der gespeicherte Bitstrom wiedergegeben wird; und
Speichern einer Positionsinformation des verborgenen Bereichs in der Speichereinheit (150), korrelierte der Positionsinformation mit dem Bitstrom; **dadurch gekennzeichnet, daß** die Positionsinformation des verborgenen Bereichs gemäß einer vorbestimmten Reserve dergestalt bestimmt wird, daß die Positionsinformation einem Teil des Bitstroms entspricht, der um eine Zeitspanne, die der Reserve entspricht, beginnt, bevor der Teilverbergungsbefehl durch den Benutzer eingegeben wird.

18. Computerlesbares Medium nach Anspruch 17, wobei der Schritt des Erzeugens der Positionsinformation ferner das Erzeugen der Positionsinformation für den verborgenen Bereich, während der verborgene Bereich angezeigt wird, umfaßt.

## Revendications

1. Procédé d'enregistrement de données vidéo pour enregistrer un train binaire comprenant des données vidéo, le procédé comprenant :
l'affichage des données vidéo en décodant le train binaire et mémorisant le train binaire dans une unité de mémorisation prédéterminée (150) ;
la génération d'une information de position d'une zone du train binaire à cacher en réponse à une commande d'occultation de partie entrée par un utilisateur, dans lequel ladite zone de train binaire cachée n'est pas reproduite quand le train binaire mémorisé est reproduit ; et
la mémorisation de l'information de position de la zone cachée dans l'unité de mémorisation (150) ;
**caractérisé en ce que** l'information de position de la zone cachée est générée pour correspondre à une partie du train binaire commençant avant que la commande d'occultation de partie ne soit entrée par l'utilisateur par une quantité de temps correspondant à une marge prédéterminée.

2. Procédé selon la revendication 1, dans lequel la détermination de la position de la zone cachée comprend :
la génération d'une information de position de début de la zone cachée en réponse à une commande de début de zone cachée entrée par l'utilisateur ; et
la génération d'une information de position de fin de la zone cachée en réponse à une commande de fin de zone cachée entrée par l'utilisateur.

3. Procédé selon la revendication 2, dans lequel l'information de position de début de la zone cachée ou l'information de position de fin de la zone cachée est une position d'un en-tête d'une unité de reproduction vidéo comportant au moins une image.

4. Procédé selon la revendication 3, dans lequel l'information de position de la zone cachée indique une position où un en-tête correspondant à la position de début de la zone cachée ou à la position de fin de la zone cachée est mémorisé dans l'unité de mémorisation (150).

5. Procédé selon l'une quelconque des revendications 1 à 4, comprenant en outre :
la mémorisation d'un mot de passe entré par l'utilisateur requis quand un programme vidéo comportant les zones cachées est reproduit.

6. Procédé selon l'une quelconque des revendications précédentes, comprenant en outre :
le réglage de la marge en réponse à une entrée d'utilisateur.

7. Procédé selon l'une quelconque des revendications précédentes, dans lequel l'étape de génération d'une information de position de début de la zone cachée comprend la pression d'une touche de réglage de zone cachée.

8. Procédé selon la revendication 7, dans lequel l'étape de génération d'une information de position de fin de la zone cachée comprend la pression à nouveau de la touche de réglage de zone cachée après la pression de la touche de réglage de zone cachée.

9. Procédé selon l'une quelconque des revendications précédentes, dans lequel l'étape de génération de l'information de position comprend en outre la génération de l'information de position de la zone cachée durant l'affichage de la zone cachée.

10. Procédé selon la revendication 9, dans lequel l'étape de mémorisation de l'information de position comprend en outre la corrélation de l'information de position générée avec le train binaire et la mémorisation de l'information de position corrélée.

11. Appareil d'enregistrement et/ou de reproduction de données vidéo comprenant :
un décodeur (130) qui reçoit un train binaire comportant des données vidéo et qui décode le train binaire ;
une unité de mémorisation (150) qui mémorise le train binaire décodé ; et
un générateur d'informations de position de zone de train binaire cachée (140) qui détermine une position d'une zone de train binaire cachée en réponse à une commande d'occultation de partie entrée par un utilisateur au moyen d'un dispositif de saisie, dans lequel ladite zone de train binaire cachée n'est pas reproduite quand le train binaire mémorisé est reproduit ; et qui mémorise l'information de position de la zone cachée dans l'unité de mémorisation (150) ; **caractérisé en ce que** l'information de position de la zone cachée est déterminée de telle sorte que l'information de position corresponde à une partie du train binaire commençant avant que la commande d'occultation de partie ne soit entrée par l'utilisateur par une quantité de temps correspondant à une marge prédéterminée.

12. Appareil selon la revendication 11, dans lequel le générateur d'informations de position de zone cachée (140) détermine une position de début de la zone cachée en réponse à une commande de début de zone cachée entrée par l'utilisateur et détermine une position de fin de la zone cachée en réponse à une commande de fin de zone cachée entrée par l'utilisateur.

13. Appareil selon la revendication 12, dans lequel la position de début de la zone cachée ou la position de fin de la zone cachée est une position d'un en-tête d'une unité de reproduction vidéo comportant une pluralité d'images.

14. Appareil selon la revendication 13, dans lequel l'information de position de la zone cachée indique une position où un en-tête correspondant à la position de début de la zone cachée ou à la position de fin de la zone cachée est mémorisé dans l'unité de mémorisation (150).

15. Appareil selon l'une quelconque des revendications 11 à 14, dans lequel la commande d'occultation de partie est entrée durant la visualisation de la zone cachée.

16. Appareil selon la revendication 15, dans lequel l'information de position mémorisée est l'information de position qui est corrélée avec le train binaire.

17. Support lisible par ordinateur sur lequel est enregistré un programme informatique pour exécuter un procédé mis en oeuvre par un ordinateur, le procédé comprenant :
l'affichage d'une vidéo en décodant le train binaire et mémorisant le train binaire dans une unité de mémorisation prédéterminée (150).
la détermination d'une position d'une zone cachée dans ledit train binaire en réponse à une commande d'occultation de partie entrée par un utilisateur, dans lequel ladite zone de train binaire cachée n'est pas reproduite quand le train binaire mémorisé est reproduit ; et
la mémorisation de l'information de position de la zone cachée dans l'unité de mémorisation (150) corrélée avec l'information de position avec le train binaire ; **caractérisé en ce que** l'information de position de la zone cachée est déterminée selon une marge de telle sorte que l'information de position corresponde à une partie du train binaire commençant avant que la commande d'occultation de partie ne soit entrée par l'utilisateur par une quantité de temps correspondant à la marge.

18. Support lisible par ordinateur selon la revendication 17, dans lequel l'étape de génération de position comprend en outre la génération de l'information de position de la zone cachée durant l'affichage de la zone cachée.
